Europäisches Patentamt

(19) European Patent Office

Office européen des brevets

(11) Numéro de publication: **0 145 587**
**B1**

(12) **FASCICULE DE BREVET EUROPÉEN**

(45) Date de publication du fascicule du brevet:
02.09.87

(21) Numéro de dépôt: **84402461.2**

(22) Date de dépôt: **30.11.84**

(51) Int. Cl.⁴: **A 47 J  29/00,** A 47 J  39/02,
A 23 B  5/00

(54) Procédé pour conserver chauds des oeufs cuits a la coque et moyen de mise en oeuvre.

(30) Priorité: **09.12.83  FR 8319754**

(43) Date de publication de la demande:
**19.06.85 Bulletin 85/25**

(45) Mention de la délivrance du brevet:
**02.09.87 Bulletin 87/36**

(84) Etats contractants désignés:
**AT BE CH DE GB IT LI LU NL SE**

(56) Documents cité:
**FR-A-1 000 032**
**FR-A-2 207 678**
**GB-A-587 058**
**US-A-1 452 907**
**US-A-2 053 935**
**US-A-3 411 432**
**US-A-3 541 947**
**US-A-3 545 832**

(73) Titulaire: **E.F.Y.C.A. ETUDES ET FABRICATION DE
L'YONNE CONSTRUCTION ET AUTOMATION
Société Anonyme, 10, rue de l'Epalu, F-89220
Bleneau (FR)**

(72) Inventeur: **Coppolani, Jean, 18, rue Perquel,
F-95160 Montmorency (FR)**

(74) Mandataire: **Vander- Heym, Roger, 172 Boulevard
Voltaire, F-75011 Paris (FR)**

EP 0 145 587 B1

LIBER, STOCKHOLM 1987

## Description

La présente invention concerne un procédé pour conserver chauds des oeufs cuits à la coque et un moyen de mise en oeuvre.

On sait que la cuisson d'un oeuf à la coque s'effectue en le plongeant pendant trois ou quatre minutes dans de l'eau bouillante.

La consommation de l'oeuf s'effectue dès que celui-ci est sorti de l'eau de cuisson car, si on laisse l'oeuf se refroidir ses qualités sont altérées (aspect et goût).

De ce fait, la consommation des oeufs cuits à la coque est peu répandue dans les restaurants qui offrent à la clientèle des plats préparés à l'avance en raison du fait que les oeufs doivent être cuits à la demande, d'où la nécessité d'un personnel affecté à ce service. A cela s'ajoute le fait que la demande évoluant au cours de la journée, le consommateur est parfois obligé d'attendre sa commande plus longtemps qu'il ne le souhaiterait.

Le procédé de l'invention permet de conserver dans de bonnes conditions des oeufs cuits à la coque.

Il consiste essentiellement, après avoir fait cuire les oeufs de la façon traditionnelle, à les placer dans une enceinte dans laquelle règne une température de l'ordre de 45 à 60°C et une hygrométrie de l'ordre de 90 à 100 %.

L'expérience a montré qu'un bon résultat était obtenu avec une température ambiante de 55°C.

A cette température, les oeufs peuvent être conserves pendant, au moins, vingt quatre heures puis être consommés chauds sans avoir subi aucune altération de goût et, ou, d'aspect.

L'invention prévoit aussi un moyen pour la mise en oeuvre de ce procédé.

Selon l'invention, on utilise un boîtier fermé, partiellement rempli d'eau chaude et comportant entre la surface de l'eau et le couvercle un moyen pour positionner des oeufs cuits à la coque, la température de l'eau étant contrôlée par un thermostat d'ambiance et par un hygrostat.

L'invention sera mieux comprise par la description qui va suivre, faite en se référant au dessin annexé à titre d'exemple explicatif et non limitatif, sur lequel:

La figure 1 est une vue en perspective d'un boîtier conservateur permettant la mise en oeuvre du procédé de l'invention;

La figure 2 est une vue en coupe du boîtier conservateur de la figure 1;

La figure 3 est une vue en coupe effectuée selon la ligne III-III de la figure 2;

La figure 4 est une vue partielle en perspective et à plus grande échelle montrant un détail de réalisation.

En se reportant au dessin, on voit que le boîtier conservateur est constitué par un réceptacle 1, réalisé par exemple, en polyuréthane moulé, obturé par un couvercle 2, transparent, articulé sur ledit réceptacle et présentant, éventuellement, un contrepoids 3.

Le réceptacle 1 est partiellement rempli d'eau dont la surface 4 ménage entre elle et le couvercle 2 un espace 5 dans lequel sont placés les oeufs A préalablement cuits à la coque.

Selon un mode de réalisation, la température de l'espace 5 est maintenue à 55°C et l'hygrométrie est maintenue aux alentours de 90 %.

A cet effet, l'eau est chauffée par une résistante chauffante 6 placée sous la dépendance d'un thermostat d'ambiance 7 et d'un hygrostat 8.

Les oeufs cuits à la coque sont placés dans des coquetiers 9 posés sur un support constitué par l'association de profilés 10 et 11 affectant une section en forme d'U.

Les profilés reposent par leurs extrémités sur un épaulement périphérique 12 prévu sur le réceptacle 1 et sont disposés de façon à ce que les branches latérales des profilés supérieurs 10 reposent sur la partie médiane de ceux 11, des ouvertures et, ou, des encoches étant prévues sur l'une ou l'autre des branches desdits profilés pour permettre à l'air chaud et humide de circuler.

Dans le cas du dessin annexé, des trous 13 sont prévus dans les branches latérales des profilés 10.

Les profilés ont une double fonction, ils constituent une surface d'appui pour les coquetiers 9 et évitent la projection de jets de vapeur.

Comme montré notamment sur la figure 4, la partie médiane 10a de chaque profilé 10 se raccorde aux branches latérales par l'entremise de bourrelets 14 formant en combinaison avec ladite partie médiane, une rainure de centrage des coquetiers 9 qui de préférence, se présentent chacun sous l'aspect d'un U renversé dont la partie médiane 9a présente un trou 15 de réception d'un oeuf.

La résistance électrique 6 peut être placée sous la dépendance d'un thermostat de contact (non représenté) qui coupe le circuit électrique dès que la température de la résistance s'élève au-dessus d'une valeur de sécurité prédéterminée.

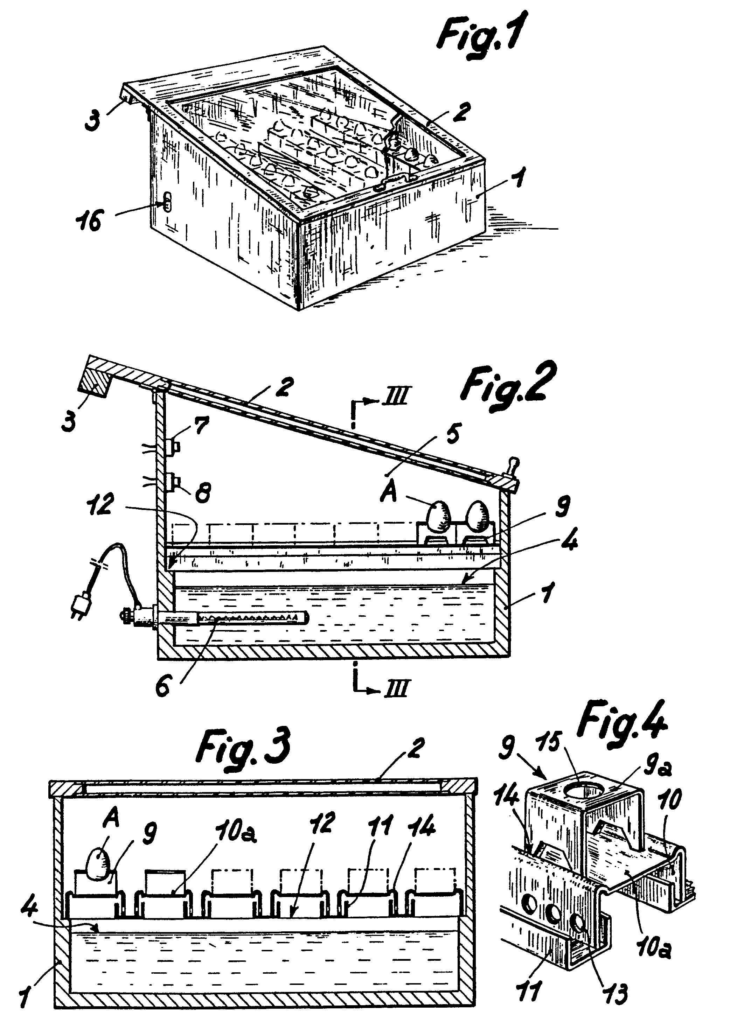

C'est ainsi, encore, que le réceptacle 1 peut être équipé d'un dispositif de contrôle du niveau tel que schématisé en 16 (figure 1) ou être associé à un dispositif de remplissage à niveau constant (non représenté).

## Revendications

1. Procédé pour conserver chauds des oeufs cuits à la coque consistant à placer les oeufs à leur sortie de l'eau de cuisson, dans une enceinte dont la température est maintenue entre 45 et 60°C et présentant une hygrométrie de l'ordre de 90 à 100 %.

2. Procédé pour conserver chauds des oeufs cuits à la coque, selon la revendication 1, caractérisé en ce que la température est de 55°C.

3. Dispositif de mise en oeuvre du procédé,

selon l'une quelconque des revendications 1 et 2, caractérisé en ce que les oeufs sont placés dans un boîtier se composant d'un réceptacle (1) obturé par un couvercle (2), ledit réceptacle étant partiellement rempli d'eau dont la surface (4) ménage entre elle et ledit couvercle un espace (5) comportant des moyens pour maintenir les oeufs (A) et en ce que l'eau est chauffée par une résistance chauffante (6) placée sous la dépendance d'un thermostat d'ambiance (7) et d'un hygrostat (8).

4. Dispositif de mise en oeuvre du procédé, selon la revendication 3, caractérisé en ce que les oeufs sont placés dans des coquetiers (9) reposant sur un support constitué par l'association de profilés (10-11) à section en forme d'U dont les branches sont imbriquées, celles des profilés (10) supérieurs s'étendant vers le bas et celles des profilés (11) inférieurs s'étendant vers le haut, les extrémités desdits profilés reposant sur un épaulement (12) périphérique de la paroi du réceptacle (1).

5. Dispositif de mise en oeuvre du procédé, selon la revendication 4, caractérisé en ce que des encoches et ,ou, des trous sont prévus dans les branches des profilés.

6. Dispositif de mise en oeuvre du procédé selon l'une quelconque des revendications 4 et 5, caractérisé en ce que le raccordement de la partie médiane (10a) de chaque profilé supérieur (10), à ses branches latérales s'effectue par l'entremise de bourrelets (14) formant avec ladite partie médiane une rainure de centrage des coquetiers (9) qui, de préférence, sont constitués chacun par un étrier dont la partie médiane présente une ouverture de réception d'un oeuf.

**Patentansprüche**

1. Verfahren zum Warmhalten weichgekochter Eier, darin bestehend, daß die Eier nach ihrer Entnahme aus dem Kochwasser in einem Wärmeschrank untergebracht werden, dessen Temperatur bei 45 - 60 Grad Celsius gehalten wird und der eine Luftfeuchtigkeit von 90 - 100 Grad aufweist.

2. Verfahren zum Warmhalten weichgekochter Eier entsprechend Patentanspruch 1, dadurch gekennzeichnet, daß die Temperatur 55 Grad Celsius beträgt.

3. Vorrichtung zur Durchführung besagten Verfahrens entsprechend einem der Patentansprüche 1 oder 2, dadurch gekennzeichnet, daß die Eier in einen Kasten gelegt werden, der aus einem Aufnahmebehälter (1) und einem Schließdeckel (2) besteht, wobei der Aufnahmebehälter teilweise mit Wasser gefüllt ist, zwischen dessen Oberfläche (4) und besagtem Deckel ein Freiraum (5) besteht, in dem Halterungen für die Eier (A) angebracht werden können, sowie dadurch, daß das Wasser durch einen Heizwiderstand (6) in Abhängigkeit eines Raumthermostaten (7) und eines Feuchtigkeitsmessers (8) erhitzt wird.

4. Vorrichtung zur Durchführung besagten Verfahrens entsprechend Patentanspruch 3, dadurch gekennzeichnet, daß die Eier in Eierhaltern untergebracht werden (9), die auf einem Träger aufliegen, der durch das Zusammenfügen von Profilen (10, 11) entsteht, deren Querschnitt die Form eines U besitzt und deren Schenkel verschachtelt sind, die der oberen Profile (10) nach unten stehend und die der unteren Profile (11) nach oben stehend, wobei die Enden besagter Profile auf einer Randschulter (12) der Wand des Aufnahmebehälters (1) aufliegen.

5. Vorrichtung zur Durchführung besagten Verfahrens entsprechend Patentanspruch 4, dadurch gekennzeichnet, daß in den Schenkeln der Profile Einkerbungen und/oder Löcher vorgesehen sind.

6. Vorrichtung zur Durchführung besagten Verfahrens entsprechend einem der Patentansprüche 4 oder 5, dadurch gekennzeichnet, daß der Anschluß des Mittelteils (10a) jedes oberen Profils (10) an seine Seitenschenkel über Wulste (14) erfolgt, die mit dem besagten Mittelteil eine Zentrierrille für die Eierhalter (9) bilden, von denen jeder vorzugsweise die Form eines Bügels bbesitzt, dessen Mittelteil eine Öffnung zur Aufnahme des Eies aufweist.

**Claims**

1. Method for keeping half-boiled eggs hot consisting of placing the eggs on leaving the cooking water, in an enclosure whose temperature is held between 45 and 60° C and which has a hygrometry of the order of 90 to 100 %.

2. Method for keeping boiled eggs hot according to claim 1, characterized in that the temperature is 55° C.

3. A device for implementing the method according to any one of claims 1 to 2, characterized in that the eggs are placed in a box formed of a container (1) closed by a lid (2), said container being partially filled with water whose surface (4) forms between it and said lid a space (5) including means for holding the eggs in position (A) and in that the water is heated by a heating resistance (6) placed under the control of an ambiance thermostat (7) and a hygrostat (8).

4. Device for implementing the method according to claim 3, characterized in that the eggs are placed in egg cups (9) resting on a support formed by the association of shaped bars (10-11) with a U shaped section whose legs are imbricated, those of the upper bars (10) extending downwardly and those of the lower bars (11) extending upwardly, the ends of said shaped bars resting on a peripheral shoulder (12) of the wall of the container (1).

5. Device for implementing the method according to claim 4, characterized in that notches and/or holes are provided in the legs of the shaped bars.

6. Device for implementing the method according to any one of claims 4 and 5, characterized in that the connection of the middle part (10a) of each upper bar (10) to its side legs includes rims (14) forming with said middle part a group for centering the egg cups (9) which are preferably each formed by a stirrup shaped part whose middle portion has an egg receiving opening.

**Fig.1**

**Fig.2**

**Fig.3**

**Fig.4**